# EUROPÄISCHE PATENTANMELDUNG

(11) **EP 1 063 853 A1**
(43) Veröffentlichungstag der Anmeldung: **27.12.2000**
(21) Anmeldenummer: 99112108.8
(22) Anmeldetag: 23.06.1999
(51) Int. Cl.: H04Q 3/00, H04M 11/00, H04M 11/04

(54) **Verfahren zur Fernsteuerung, Fernmessung bzw. Fern-Überwachung sowie Anordnung zur Durchführung dieser Verfahren**

(71) Anmelder: SIEMENS AKTIENGESELLSCHAFT, 80333 München (DE)
(72) Erfinder: Gundlach, Michael, Dr., 81739 München (DE)

(57) **Zusammenfassung**

Verfahren zur Fernsteuerung einer Vorrichtung, insbesondere über eine Simplex-Übertragungsstrecke, durch einen von der Vorrichtung entfernten Sender (PC, Telefon), bei dem in einem ersten Schritt über einen Dienstvermittlungsknoten (SSP) eines intelligenten Netzes eine Steuerkonfiguration an einer der Vorrichtung zugeordneten Steuereinrichtung (CU) eingestellt und in einem zweiten Schritt ein Steuersignal an die Steuereinrichtung ausgegeben wird.

## Beschreibung

Die Erfindung betrifft ein Verfahren zur Fernsteuerung einer Vorrichtung, ein Verfahren zur Fernmessung einer Größe bzw. ein Verfahren zur Fern-Überwachung eines Zustandes sowie eine Anordnung zur Durchführung dieser Verfahren.

Verfahren zur Steuerung einer Vorrichtung durch einen entfernten Sender, Verfahren zur Messung einer physikalischen Größe unter Ausgabe des Meßwertes an einen entfernten Empfänger oder Verfahren zur Fern-Überwachung eines Zustandes unter Ausgabe eines Alarmsignals an einen entfernten Empfänger bei einer unzulässigen Zustandsänderung sind seit langem bekannt und werden in der Industrie und im Verkehrswesen routinemäßig angewandt. Sie haben seit einigen Jahren auch verstärkt Eingang in den privaten Bereich gefunden, insbesondere im Zusammenhang mit der Fernsteuerung von Spielzeugen, Beleuchtungseinrichtungen, Audio- und Videoanlagen und mit der Entwicklung zunehmend ausgefeilter Alarmsysteme für Gebäude und Wohnungen. Während im Bereich der privaten Nutzung bis vor einigen Jahren für die verschiedenen Einsatzfelder isolierte Fernbedienungen üblich waren, sind in letzter Zeit verstärkte Anstrengungen zur Entwicklung und Kommerzialisierung eines einheitlichen, vernetzten Fernmeß- und -wirksystems für den privaten Bereich auf der Grundlage eines speziellen Installations-Bussystems (European Installation Bus = EIB bzw. "Hausbus") unternommen worden. Ein solches System läßt sich über einen angeschlossenen PC konfigurieren und steuern, einzelne Fernsteuer-, Fernmeß- oder Alarmierungsvorgänge sind aber auch über separate Fernsteuersender bzw. Fernmeß- oder Alarmsignalempfänger realisierbar.

Ungeachtet dieser Fortschritte beim Aufbau vernetzter Systeme sind die heute zusammenfassend unter den Begriff "Telematik" gefaßten Telekommunikationsdienste im Zusammenhang mit Fernsteuer-, Fernmeß- und Fernalarmierungsvorgängen bis heute eigenständige Telekommunikationsdienste mit einem spezifischen physikalischen Träger und in sich relativ abgeschlossen. Ihre Flexibilität hinsichtlich der Einsatz- und Zugriffsmöglichkeiten ist daher noch beschränkt.

Der Erfindung liegt daher die Aufgabe zugrunde, verbesserte Verfahren der angegebenen Art sowie eine Anordnung zur Durchführung dieser Verfahren anzugeben, mit denen die Flexibilität von Telematikdiensten erhöht und ihre Nutzung erleichtert werden kann.

Diese Aufgabe wird hinsichtlich Ihres Verfahrensaspektes gelöst durch Verfahren mit den Merkmalen der Ansprüche 1, 2 bzw. 3 und hinsichtlich ihres Anordnungsaspektes durch eine Anordnung mit den Merkmalen des Anspruchs 10.

Die Erfindung schließt den wesentlichen Gedanken ein, die erwähnten Verfahren unter Einsatz eines intelligenten Netzes zu realisieren, auf das zur Konfiguration eines jeweiligen Verfahrens über das Internet oder ein Telefonnetz zugegriffen werden kann und unter dessen Nutzung aktuell Fernsteuersignale an eine entfernte Vorrichtung ausgegeben bzw. Meßwertsignale oder Alarmsignale von einer entfernten Meß- oder Überwachungseinrichtung mittels eines Telefons empfangen werden können.

Bevorzugt wird zur Ausgabe von Meßsignalen und speziell von Alarmsignalen ein Mobilfunknetz in Verbindung mit einem Handy benutzt, da ein solches praktisch ständig in Reichweite des Nutzers ist. Die vorgeschlagene Lösung ist aber auch mit einem Festnetz-Endgerät, insbesondere einem Schnurlostelefon, nutzbar, welches der Nutzer - jedenfalls im häuslichen Bereich - ebenfalls praktisch ständig in seiner Nähe hat. Die Dateneingabe zur Verfahrenskonfiguration erfolgt im professionellen Bereich oder für Computerbesitzer bzw. Personen mit einem anderweitigen Internet-Zugang (beispielsweise über das Fernsehnetz) auch im privaten Bereich zweckmäßigerweise über das Internet und zwar das World Wide Web (WWW).

Der Teilnehmer erhält über HTTP (HyperText Transfer Protocol - das zur Übermittlung von HTML-Dokumenten im WWW eingesetzte Übertragungsprotokoll) eine Eingabemaske, wobei eine Programmierung ggfs. unter Verwendung von JAVA erfolgt. Die Konfigurationseingaben des Teilnehmers werden dann über den Dienstverwaltungsknoten SMP (Service Management Point) des intelligenten Netzes zum Dienststeuerungsknoten SCP (Service Control Point) bzw. zu einer Konfigurationsdatenbasis (einem speziellen SDP = Service Data Point) weitergeleitet. Es versteht sich, daß auf diesem Wege neben der Eingabe neuer Daten auch ein Lesen und ggfs. Löschen der vorhandenen Einträge oder entsprechende Änderungen erfolgen können.

Alternativ ist die Konfiguration eines Steuer-, Meß- oder Überwachungsprogramms auch mittels des DTMF(Dual Tone Multiple Frequency)-Verfahrens über das Telefonnetz möglich. Diese Eingabe kann menügesteuert unter Verwendung der intelligenten Peripherie (Intelligent Peripheral) des IN oder direkt durch Eingabe festgelegter DTMF-Steuerzeichen erfolgen. Diese Art der Eingabe ist weniger bequem als die Eingabe über die alphanumerische Tastatur eines Computers, ermöglicht aber in Sonderfällen (speziell im privaten Bereich) eine Konfigurierung oder Konfigurationsänderung auch bei Nichtverfügbarkeit eines Computers bzw. einer alphanumerischen Eingabeeinheit. Die Verbindung des als Eingabeeinheit verwendeten Mobilfunk- oder Festnetz-Endgerätes zur Konfigurationsdatenbasis bzw. zur gesteuerten, messenden oder überwachenden Einheit wird über den entsprechenden Dienstvermittlungsknoten des IN hergestellt.

Zweckmäßigerweise sind bei der vorgeschlagenen Anordnung Authentisierungsmittel zum Nachweis der Zugangsberechtigung eines zugreifenden Teilnehmers zu den genannten Einheiten bzw. zur Konfigurationsdatenbasis vorgesehen, die insbesondere eine dem entsprechenden Dienststeuerungsknoten vorgeschaltete Freigabeeinrichtung steuern. Die Authentisierung kann mit den heute hierzu bekannten Mitteln, also etwa durch Passwort, eine PIN, Chipkarte oder auch den persönlichen Fingerabdruck, erfolgen. Die entsprechenden Verfahren sind an sich bekannt und bedürfen daher hier keiner weiteren Erläuterung.

Zu den oben angesprochenen gesteuerten Einheiten zählen im privaten Bereich insbesondere Heizungs- und Warmwasserbereitungsanlagen, Beleuchtungseinrichtungen, Rolladensteuerungen, elektronische Türschlösser, Audio- und Videoanlagen etc., zu den messenden Einheiten zählen im häuslichen Bereich speziell Meßgeräte für Temperatur, Stromverbrauch, Umgebungshelligkeit, Luftfeuchtigkeit o.ä. und zu den überwachenden Einheiten unter anderem Bewegungsfühler, Glasbruchmelder oder Wassermelder.

Mit dem oben eingeführten Begriff der Konfigurationsdatenbasis ist die Gesamtheit der beim Dienststeuerungsknoten verfügbaren Dienste, Logiken und zugehörigen Datenbasen für die benötigten Steuerfunktionen zu verstehen. Die verfügbaren Logiken ermöglichen die Ausführung der Erfindung unter Nutzung der gesamten in der Architektur des intelligenten Netzes realisierten Flexibilität, beispielsweise hinsichtlich Zeitvorgaben für bestimmte Steuer-, Meß- oder Überwachungsvorgänge und der Weiterleitung bestimmter Daten an verschiedene Adressaten (Rufnummern).

Wenn beispielsweise ein Alarmsignal einer Überwachungseinrichtung zur Gebäudesicherung (Alarmanlage) an einen vorgegebenen Teilnehmer übermittelt werden soll, baut der SCP über den zum Teilnehmer gehörenden SSP eine Verbindung zum Teilnehmer auf, d.h. dieser erhält einen Anruf. Der SSP kann entweder zu einem Festnetzanschluß des Teilnehmers gehören oder er wird - im Falle der Nutzung eines Mobilfunknetzes oder der UPT (Universal Personal Telecommunication) - durch das zugehörige Mobilitätsmanagement gefunden. Nachdem der Teilnehmer den Ruf angenommen hat, wird ihm eine die Bedeutung des Alarmsignals in geeigneter Weise wiedergebende Nachricht - insbesondere eine Sprach-Nachricht, eine SMS-Nachricht oder eine Fax-Nachricht - übermittelt. Zuordnungen zwischen Signalen der Alarmanlage und auszugebenden Nachrichten sind im SCP, beispielsweise tabellarisch, gespeichert. Die konkrete Ausgestaltung der Benachrichtigung ist vom verwendeten Endgerät und von vorgewählten Einstellungen bei der Dateneingabe abhängig und wird über die IP gesteuert. Die Übermittlung der Nachricht kann im übrigen (was aus Gründen der Datensicherheit in erster Linie bei Absetzung über einen Festnetzanschluß sinnvoll sein könnte) auch von einer nochmaligen Authentifikation seitens des den Ruf annehmenden Teilnehmers abhängig gemacht werden.

Vorteile und Zweckmäßigkeiten der Erfindung ergeben sich im übrigen aus den Unteransprüchen sowie der nachfolgenden Erläuterung bevorzugter Ausführungsbeispiele anhand der Figuren. Von diesen zeigen:
- Fig. 1: eine schematische Darstellung der Gesamtarchitektur der vorgeschlagenen Anordnung,
- Fig. 2: eine schematische Darstellung zur Erläuterung der Systemkonfiguration durch einen Teilnehmer in einer ersten Ausführungsform,
- Fig. 3: eine schematische Darstellung zur Erläuterung der Systemkonfiguration durch einen Teilnehmer gemäß einer zweiten Ausführungsform,
- Fig. 4: eine schematische Darstellung zur Erläuterung des Ablaufes bei der Ausgabe eines Alarmsignals und
- Fig. 5: eine schematische Darstellung zur Erläuterung des Ablaufes bei der Eingabe eines Steuersignals.

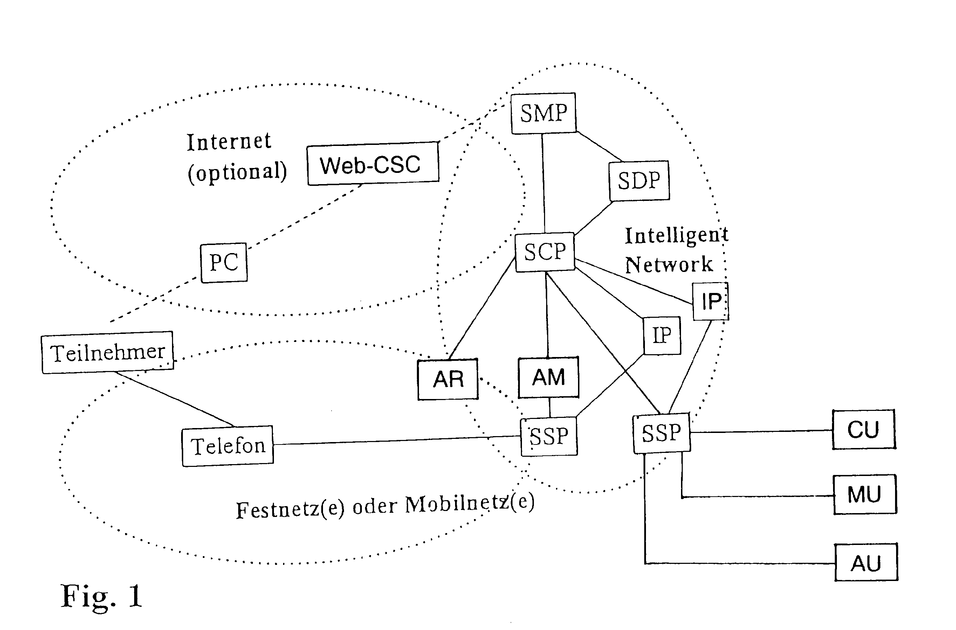

Wie Fig. 1 zu entnehmen ist, umfaßt die Anordnung zunächst ein Festnetz oder Mobilfunknetz mit einem dem Teilnehmer verfügbaren Telefon, ein intelligentes Netz (Intelligent Network) und einen die Schnittstelle zwischen Mobilfunk- bzw. Festnetz und dem Intelligent Network bildenden Dienstvermittlungsknoten SSP. Der Teilnehmer kann zum einen über das Telefon und den SSP zur Dateneingabe in eine Konfigurationsdatenbasis SDP (im oben erläuterten allgemeinen Sinne) über einen Dienststeuerungsknoten SCP auf diese zugreifen. Ein zweiter Zugriffsweg besteht für den Teilnehmer in seinem Heimcomputer PC mit Zugang zum Internet, wo über eine Kundendienststeuerung CSC (Customer Control Service) eine Verbindung zu einem Dienststeuerungsknoten SMP (Service Management Point) des intelligenten Netzes und von diesem schließlich wiederum zum SCP und zur Konfigurationsdatenbasis SDP aufgebaut wird.

In der Figur ist weiterhin zu erkennen, daß dem SCP eine intelligente Peripherie IP (Intelligent Peripheral) zugeordnet ist. Über einen separaten Dienstvermittlungsknoten SSP sind an das intelligente Netz - hier als Beispiele für über Telematikdienste gesteuerte Einrichtungen angegeben - eine Steuereinrichtung CU für eine ferngesteuerte Vorrichtung, eine Meßeinrichtung MU für eine Fernmessung sowie eine Überwachungs- und Alarmierungseinrichtung AU zur Fernüberwachung eines Zustandes und zur Ausgabe eines Alarmsignals bei unzulässiger Zustandsänderung (beispielsweise eine Alarmanlage zur Gebäudesicherung) angeschlossen.

Als Beispiele für dem SCP zugeordnete Sonderfunktionen sind hier zudem Authentisierungsmittel AM, die zwischen den SSP, den Teilnehmer und den SCP geschaltet sind, und ein Aktivitätenregister AR zur Gestaltung zeitlicher Abläufe von Steuer-, Meß- bzw. Überwachungsfunktionen dargestellt. AM und AR können im SCP integriert sein. Der Teilnehmer kann über einen der beiden erwähnten Zugangswege - zunächst mittels an sich von etablierten Telematikdiensten bekannter Algorithmen - eine Verfahrenskonfiguration zum Betrieb der angeschlossenen Einheiten CU, MU und AU eingeben, wobei die Konfigurationsdatenbasis SDP und ggfs. - falls die Steuer-, Meß- bzw. Überwachungsaufgaben teilweise selbsttätig nach einem vorgegebenen Programm ablaufen sollen - auf das Aktivitätenregister AR geladen werden. Nach Konfigurierung des Systems kann (wiederum über einen der beiden Zugangswege) zu einem späteren Zeitpunkt ein aktuelles Steuersignal eingegeben werden, woraufhin beispielsweise ein Steuervorgang über den SCP, den zweiten SSP und die CU zur Steuerung einer angeschlossenen Vorrichtung (Heizungsanlage, Beleuchtungseinrichtung o.ä.) eingeleitet werden kann. Andererseits kann der Teilnehmer, getriggert durch ein vorbestimmtes Ausgangssignal einer alarmierenden Einheit AU, über den SCP und seinen SSP und schließlich über sein Telefon alarmiert werden, wobei auf eine in der intelligenten Peripherie IP gespeicherte Art und Weise eine Information über den Termin übermittelt wird, der die Alarmierung ausgelöst hat.

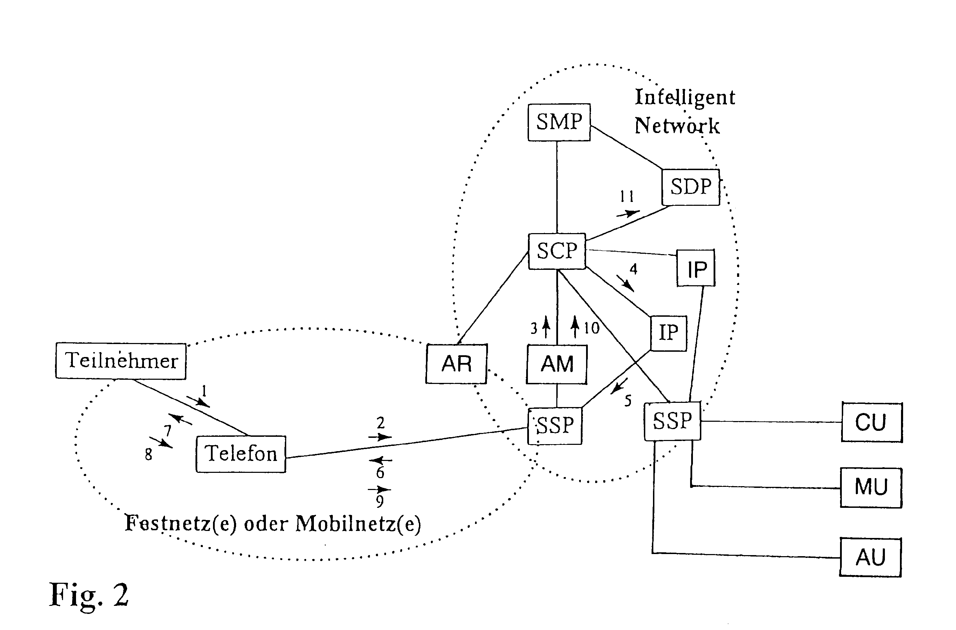

In Fig. 2 ist eine Konfigurierung über das Telefon mittels des DTMF-Verfahrens in einer Schrittfolge von 1 bis 11 skizziert. Schritt 1 ist die Wahl der IN-Nummer am Telefon, von wo aus diese in einem Schritt 2 zum SSP gelangt, von dem aus im Schritt 3 - falls der Teilnehmer eine korrekte Authentisierung vorgenommen hat - eine Verbindung zum SCP hergestellt wird. Im Schritt 4 erfolgt vom SCP aus zur IP eine Ansagesteuerung, und die gewählte Ansage wird in den Schritten 5, 6 und 7 zunächst zum SSP, dann von diesem zum Telefon und schließlich vom Telefon (in akustischer Form) zum Teilnehmer übermittelt. Nach Wahrnehmung der Ansage gibt der Teilnehmer in einem Schritt 8, vorzugsweise unter fortgesetzter Anleitung per Ansagetext, in geordneter Weise Konfigurationsdaten ein, die dann in einem Schritt 9 vom Telefon zum SSP, im Schritt 10 vom SSP zum SCP und im Schritt 11 in die Konfigurationsdatenbasis SDP gelangen. Damit ist die Konfigurierung eines Telematik-Dienstes bezüglich mindestens einer der Einheiten CU, MU und AU erfolgt.

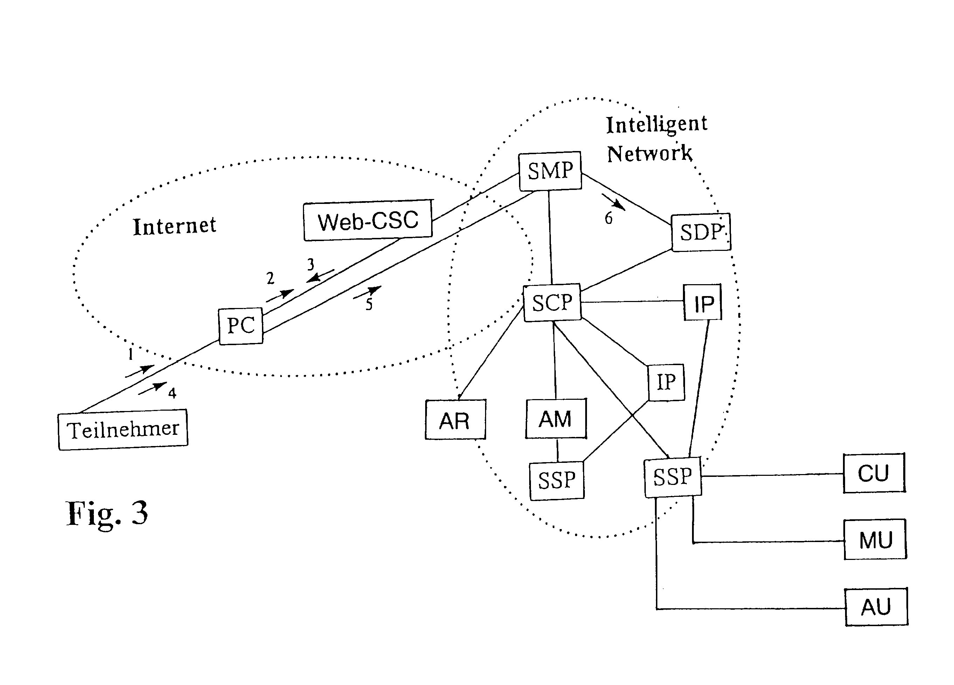

In Fig. 3 ist eine Konfigurierung durch den Teilnehmer unter Nutzung seines PC und des World Wide Web skizziert. Zunächst wird durch den Teilnehmer in einem Schritt 1 die http-Adresse am PC eingegeben, der daraufhin in einem Schritt 2 eine Verbindung zum Web-Server herstellt, von wo in einem Schritt 3 ein Herunterladen der entsprechenden Seite erfolgt. Unter Stützung auf diese heruntergeladene Internet-Seite erfolgt in einem Schritt 4 die Eingabe der Konfigurationsdaten am PC, von dem aus sie über den SMP des IN zur Konfigurationsdatenbasis SDP geleitet und ggfs. in das Aktivitätenregiter AR übernommen werden (Schritt 5 und 6). Auch bei dieser Art der Konfigurierung eines Steuer-, Meß- bzw. Überwachungsverfahrens mittels eines PC via Internet wird natürlich im Normalfall eine Authentisierung vorgesehen sein; die entsprechenden Mittel (Passwort o.ä.) sind aber in der Figur nicht dargestellt.

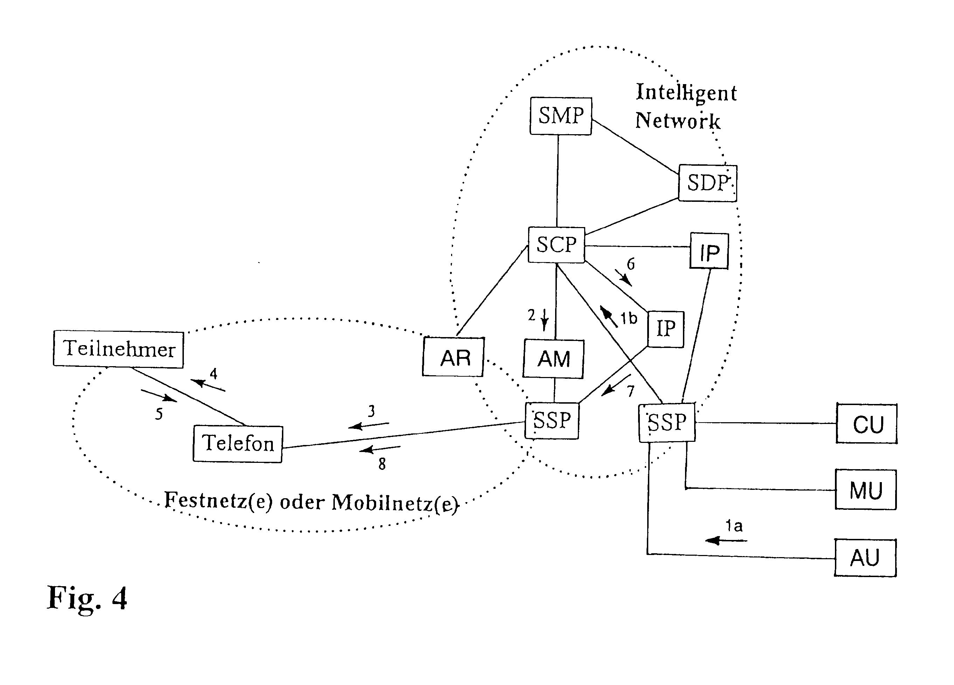

In Fig. 4 ist die Alarmierung des Teilnehmers bei Feststellung einer unzulässigen Zustandsänderung durch die Überwachungs- und Alarmierungssteuereinheit AU dargestellt. Von dieser gelangt ein die unzulässige Zustandsänderung reflektierendes Signal in einem ersten Teilschritt la zum zugeordneten SSP und von dort in einem zweiten Teilschritt 1b zum SCP. Durch diesen wird in einem Schritt 2 eine Verbindung zum dem Teilnehmer zugeordneten SSP und von diesem in einem Schritt 3 eine Verbindung zum Telefon des Teilnehmers aufgebaut. Dieses klingelt in einem Schritt 4, woraufhin der Teilnehmer in einem Schritt 5 (durch Drücken der Ruftaste am Mobiltelefon oder Abheben des Hörers beim Festnetztelefon) den Ruf annimmt. Nach geeigneter Signalisierung zwischen SSP und SCP (z.B. zur Authentisierung des Benutzers) erfolgt unter Zugriff auf die IP in einem Schritt 6 eine Ansagesteuerung, und eine in der IP generierte Sprach- oder Textnachricht wird in einem Schritt 7 zunächst zum SSP und dann in einem Schritt 8 zum Telefon weitergeleitet, wo der Teilnehmer sie (in einem nicht weiter bezeichneten Schritt) optisch oder akustisch aufnehmen kann.

Wie oben bereits erwähnt, kann anstelle des Teilnehmers, der das System konfiguriert hat, auch ein anderer Teilnehmer (durch Eingabe von dessen IP-Nummer bei der Konfigurierung) als Zieladresse für ein Alarmsignal ausgewählt werden, wobei dann der oben skizzierte Ablauf diesem anderen Teilnehmer gegenüber stattfindet.

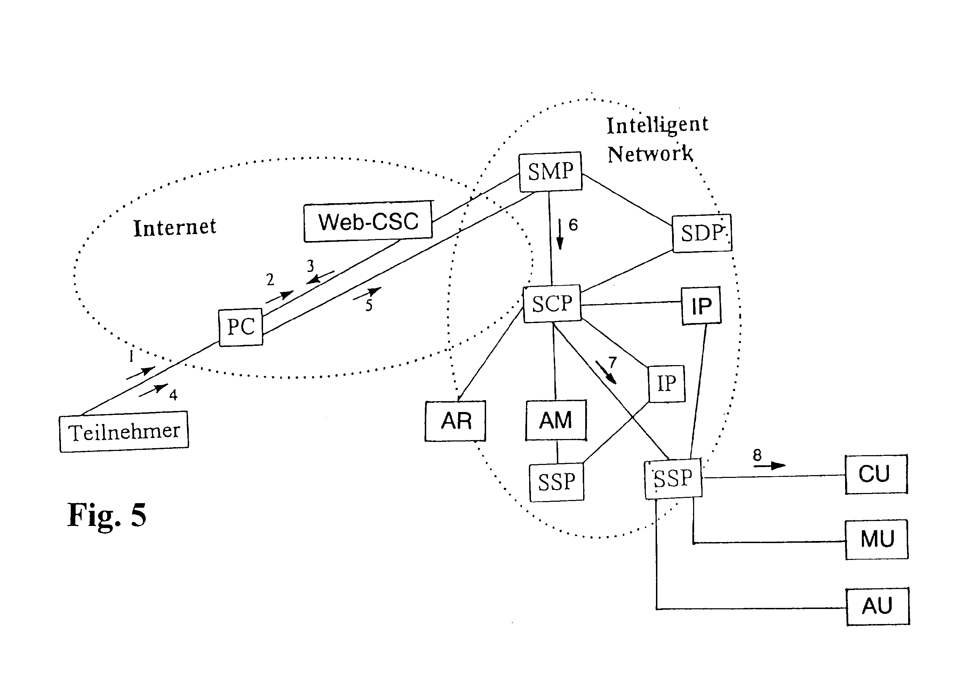

In Fig. 5 ist die Aktivierung einer Steuerfunktion an der Steuereinheit CU in Echtzeit aufgrund einer vorab definierten Konfiguration per Computer-Eingabe dargestellt. Die Schritte 1 bis 3 sind dieselben wie bei der oben unter Bezugnahme auf Fig. 3 beschriebenen Konfiguration. Abweichend vom Konfigurations-Procedere wird dann im Schritt 4 aber nicht ein Konfigurationsdatensatz, sondern ein spezifisches Echtzeit-Steuersignal in ein entsprechendes Feld der heruntergeladenen Konfigurations-Seite eingegeben, welches in einem Schritt 5 zum SMP, von dort in einem Schritt 6 zum SCP, von diesem in einem Schritt 7 zu dem für die angesprochene Steuereinheit CU zuständigen SSP und schließlich in einem Schritt 8 zur Steuereinheit CU selbst gesandt wird, wo daraufhin die entsprechende Telematikfunktion aktiviert wird. In vergleichbarer Weise ist - in Abwandlung des in Fig. 2 skizzierten Konfigurierungsablaufes - eine Telematikfunktion in Echtzeit über den zweiten Zugriffsweg, d.h. über das Telefon, zu aktivieren.

Die Ausführung der Erfindung ist nicht auf das beschriebene Beispiel beschränkt, sondern im Rahmen fachmännischen Handelns auch in einer Vielzahl von Abwandlungen möglich.

## Patentansprüche

1. Verfahren zur Fernsteuerung einer Vorrichtung, insbesondere über eine Simplex-Übertragungsstrecke, durch einen von der Vorrichtung entfernten Sender (PC, Telefon),
bei dem in einem ersten Schritt über einen Dienstvermittlungsknoten (SSP) eines intelligenten Netzes eine Steuerkonfiguration an einer der Vorrichtung zugeordneten Steuereinrichtung (CU) eingestellt und
in einem zweiten Schritt ein Steuersignal an die Steuereinrichtung ausgegeben wird.

2. Verfahren zur Fernmessung einer Größe, insbesondere über eine Simplex-Übertragungsstrecke, zur Ausgabe des Meßwertes an einen von einer Meßstelle entfernten Empfänger (PC, Telefon),
bei dem in einem ersten Schritt über einen Dienstvermittlungsknoten (SSP) eines intelligenten Netzes eine Meßkonfiguration an einer der Meßstelle zugeordneten Meßeinrichtung (MU) eingestellt und
in einem zweiten Schritt durch die Meßeinrichtung insbesondere über den ersten oder einen zweiten Dienstvermittlungsknoten (SSP) des intelligenten Netzes und ein diesem zugeordnetes Festnetz- oder Mobilfunk-Endgerät (Telefon), ein Meßwert ausgegeben wird.

3. Verfahren zur Fern-Überwachung eines Zustandes, insbesondere des Zustandes an einem Überwachungspunkt einer Vorrichtung oder Anlage oder eines Gebäudes oder Raumbereichs über eine Simplex-Übertragungsstrecke, zur Ausgabe eines Alarmsignals an einem entfernten Empfänger (PC, Telefon) bei einer vorbestimmten Zustandsänderung,
bei dem in einem ersten Schritt über einen Dienstvermittlungsknoten (SSP) eines intelligenten Netzes eine Überwachungskonfiguration an einer der Überwachungsstelle zugeordneten Überwachungseinrichtung (AU) eingestellt und
in einem zweiten Schritt durch die Überwachungseinrichtung, insbesondere über den ersten oder einen zweiten Dienstvermittlungsknoten (SSP) des intelligenten Netzes und ein diesem zugeordnetes Festnetz- oder Mobilfunk-Endgerät (Telefon), ein Alarmsignal ausgegeben wird.

4. Verfahren nach einem der vorangehenden Ansprüche,
**dadurch gekennzeichnet,** daß
dem ersten und/oder zweiten Schritt ein Schritt der Authentisierung des Teilnehmers für den Zugriff auf die Steuer-, Meßoder Überwachungseinrichtung vorausgeht.

5. Verfahren nach einem der vorangehenden Ansprüche,
**dadurch gekennzeichnet,** daß
der erste Schritt die Speicherung von Konfigurationsdaten in einer Konfigurationsdatenbasis (SDP) umfaßt, die einem Dienststeuerknoten (SCP) des intelligenten Netzes zugeordnet ist.

6. Verfahren nach einem der vorangehenden Ansprüche,
**dadurch gekennzeichnet,** daß
die Dateneingabe im ersten und/oder zweiten Schritt mittels des DTMF-Verfahrens über ein Mobilfunk- oder ein Festnetz-Endgerät (Telefon) erfolgt.

7. Verfahren nach einem der vorangehenden Ansprüche,
**dadurch gekennzeichnet,** daß
die Daten im ersten und/oder zweiten Schritt mittels eines Computers (PC) über das Internet auf alphanumerische Weise eingegeben werden.

8. Verfahren nach einem der vorangehenden Ansprüche,
**dadurch gekennzeichnet,** daß
im Zusammenhang mit der Eingabe eines Steuersignals oder der Ausgabe eines Meßwert- oder Alarmierungssignals über das Mobilfunk- oder Festnetz-Endgerät (Telefon) eine Sprach-Nachricht oder eine Fax-Nachricht und/oder eine SMS-Nachricht ausgegeben wird.

9. Verfahren nach einem der vorangehenden Ansprüche,
**dadurch gekennzeichnet**, daß
beim zweiten Schritt eine Telefon- und/oder Datenverbindung zu einem im ersten Schritt bestimmten anderen Teilnehmer als beim ersten Schritt aufgebaut wird.

10. Anordnung zur Durchführung des Verfahrens nach einem der vorangehenden Ansprüche, mit
- einer Konfigurierungseinrichtung (PC, Telefon) zum intelligenten Netz (Intelligent Network) zur Eingabe der Steuer-, Meß- oder Überwachungskonfiguration über einen Dienstvermittlungsknoten (SSP)
- einem im intelligenten Netz vorgesehenen Dienststeuerungsknoten (SCP), der mit dem ersten Dienstvermittlungsknoten einerseits sowie einer intelligenten Peripherie (IP) und einer Konfigurationsdatenbasis (SDP) andererseits verknüpft ist,
- mindestens einer mit dem ersten oder einem zweiten Dienstvermittlungsknoten (SSP) verbundenen Steuer-, Meß- oder Überwachungseinrichtung (CU, MU, AU) zur Bewirkung eines Steuer-, Meß- oder Überwachungs- und Alarmierungsvorganges und
- einer über ein Mobilfunknetz oder Festnetz mit dem ersten oder zweiten oder einem weiteren Dienstvermittlungsknoten (SSP) verbundenen Mobilfunk- oder Festnetz-Endgerät (Telefon) zur Eingabe eines Steuersignals und/oder Ausgabe eines Meßwert- oder Alarmsignals.

11. Anordnung nach Anspruch 10,
**dadurch gekennzeichnet,** daß
die Konfigurierungseinrichtung ein Mobilfunk- oder Festnetz-Endgerät (Telefon) und den mit diesem verbundenen Dienstvermittlungsknoten (SSP) des intelligenten Netzes umfassen.

12. Anordnung nach Anspruch 10,
**dadurch gekennzeichnet,** daß
die Konfigurierungseinrichtung eine Internet-Zugangseinrichtung (PC), eine mit diesem verbindbare Kundendienststeuerung (CSC) des Internet und einen mit dieser verbindbaren Dienstverwaltungsknoten (SMP) im intelligenten Netz umfaßt.

13. Anordnung nach einem der Ansprüche 10 bis 12,
**gekennzeichnet durch**
mit einer Freigabeeinrichtung, die dem Dienststeuerungsknoten (SCP) vorgeschaltet ist, verbundene Authentisierungsmittel (AM) zum Nachweis der Zugangsberechtigung eines Teilnehmers zur Konfigurationsdatenbasis (SDP) und/oder der Steuer-, Meßoder Überwachungseinrichtung (CU, MU, AU).

14. Anordnung nach einem der Ansprüche 10 bis 13,
**dadurch gekennzeichnet,** daß
dem Dienststeuerungsknoten (SCP) ein Aktivitätszeitpunkt-Register (AR) zugeordnet ist, das über eine Zeigerfunktion mit Speicherplätzen der Konfigurationsdatenbasis (SDP) verbunden ist, wodurch selbsttätig ein vorab konfigurierter zeitlicher Ablauf von Steuer-, Meß- oder Überwachungs- und Alarmierungsfunktionen bewirkt wird.

15. Anordnung nach einem der Ansprüche 10 bis 14,
**dadurch gekennzeichnet,** daß
dem Dienststeuerungsknoten (SCP) Mittel (IP) zur Generierung einer Sprach-Nachricht oder einer Fax-Nachricht oder SMS-Nachricht in Verbindung mit der Ausgabe eines Meßwert- oder Alarmsignals zugeordnet sind.
